# EUROPEAN PATENT SPECIFICATION

(11) **EP 1 459 624 B1**
(45) Date of publication and mention of the grant of the patent: **13.12.2006**
(21) Application number: 04013684.8
(22) Date of filing: 17.04.2002
(51) Int. Cl.: A01K 15/02

(54) **Automatic system-based animal training device**
Auf einem System basierende, automatische Vorrichtung zum Trainieren von Tieren
Dispositif d'entrainement d'animaux à système automatique

(30) Priority: 17.04.2001 TR 200101003; 11.07.2001 TR 200101994; 26.11.2001 TR 200103372; 11.03.2002 TR 200200639
(43) Date of publication of application: 22.09.2004
(62) Divisional of application: 02733773.2
(73) Proprietor: Kurt, Mehmet, Ceyhan, 01960 Adana (TR)
(72) Inventor: Kurt, Mehmet, Ceyhan, 01960 Adana (TR)
(74) Representative: Dereligil, Ersin

(56) References cited:
- US-A- 4 266 508

## Description

### TECHNICAL FIELD

This invention relates to an automatic animal training system serving a physical performance improvement and simulation means for the animals of particularly horse, camel or similar animals joining races throughout the world.

### STATE OF THE ART

The present patent application can be considered as a complementary part of previous patent application, WO 01/97606 the applicant of which is the same as the instant application. Therefore, the subsequent attributions are mainly directed to this WO 01/97606 application.

Once the features affecting the performances of racehorses, camels and similar animals throughout their active life are taken into consideration; it is scientifically accepted that origin, nutrition, caring, training factors have prior importance with respect to other factors. The origin of animals has a distinguished feature, since it comes in born of the animals by their nature.

Unlike the origin feature, the other above-mentioned factors can be exploited by various methods, programs and devices so enabling exclusive manner of approach to the animals. Since the present application is based upon training process for improving physical performances and simulation means by the automatic training program of animals with respect to real racing conditions, the other factors are excluded in the scope of the present application.

Patent application WO 01/97606 disclosing complete automatic system-based training notion of animals, especially participating races, has been filed by an applicant the owner of which is the same as the present application. The previous application discloses a training device the lateral and rear sides of which are surrounded by a flexible material and the front side is covered by a locking mechanism and furthermore a tractor placed to front or rear side of the training device.

In this previous application, it has been stated that the training device is guided by wheels embodied the lateral sides of the device such a way that the wheels are disposed in rails and then the device is moved accordingly, or alternatively the device is guided by some means attached to a line which is located upper side of the device.

In addition to these features, the previous application discloses orientation pattern of the training devices, namely these devices can be employed individually around racecourses or alternatively these devices can be employed multiply following each other.

These previous application is the unique approach as to complete automatic-based animal training system and brings about many advantages with the proposing features thereof. As undoubtly known that the present animal training processes are based on human intervention, in other words animal training programs involve with human-controlled manner. This human-controlled or based training approach leads the animals become physically disabled during the training process. The annual rate leading the horses disabled so huge that approximately 90% colts which would potentially become a racehorse results a termination of race life of the colts even at the beginning.

The reason leading a considerable disabling rate of the race animals, is mainly due to physiologically lack of harmony between the trainer and the animal. During the training the animal is forced to behave the manner of trainers demand and this lacking of harmony leads the animal physically disabled itself.

Furthermore, taking into consideration of human intervention for the training of animals participating long-distance races particularly encountered in Arabic countries, many disadvantages are confronted. This is indeed the case, when long-distance and accordingly long-term races are of concern, animal physical disabling problem arises since the eccentrical position of the rider on the animal leads the loss of animal stability during the training or race time.

Although some other training facilities are known from the state of the art, especially the patent US 4 266 508 and US 4 619 222, none of these patents suggests a complete automatic training system for facilitating concrete simulation with respect to the racing conditions as the present application suggests.

For example, US 4 266 508 application discloses a frame in which animals are introduced. This frame is pulled by a tractor means (self-powered vehicle) only from the front side of the frame and wheels are placed at the rear side of the frame.

US 4 266 508 application is the first proposal serving an animal surrounded training device and bears some significant advantages. Nevertheless, pulling the frame from only the front side by a vehicle, which is non-integrated to the frame, put forwards considerable disadvantages. The most inappropriate effect is referred to placement of the vehicle to the front side of the frame, since animals become easily frightened by the existence of such a vehicle in front of running direction of the animals. This would lead insufficient training practice of the animals accordingly. Besides, since the tractor means (vehicle) is not connected to the frame directly, in other words the wheels are connected to the frame by virtue of supplementary axles, changing the direction of the frame would be delayed due to inaccurate direction control mechanism. These direction-changing delays would again lead insufficient training practice of the animals.

Even the inventor of the present and also former application, PCT/ TR00/ 00048, acknowledges the deficiency i.e. pulling the training device by a tractor means or a vehicle like an automobile, jeep etc., since allocating such a tractor means cannot achieve an integrated training device.

As for the US 4 619 222, this application discloses mobile means connected from one end to the head of the animal and from other end to some guiding means by virtue of wheels. As it is seen from US 4 619 222, neither confining means surrounding the animal to be trained nor tractor means are employed in this application. In other words, in case of irritation, it is obvious that the animal can hurt itself due to lack of confining means.

Other animal training facilities are those so-called manege, running bands or tracks. These facilities are actually utilized for tempering animals particularly horses, and including abstract embodiments i.e. real race conditions are not met due to lacking of concrete simulators in these facilities.

With the suggested technical features, the previous application aimed to minimize human intervention to animal training processes and achieved this aim by the suggested automatic embodiments.

However, the applicant is aware that the features suggested in the previous application have some deficiencies; therefore the instant application is drafted for overcoming these deficiencies.

For example, driving and control mechanism of the training device has not been clarified in the previous application.

Furthermore another deficiency that has not been disclosed by the previous application is that incapability of displacement of the lateral coverages. This deficiency would cause the inability of the position of the animal in the training device and resulting the incapacity of the animal for the real-time adaptation.

### DESCRIPTION OF THE INVENTION

The object of the present invention is to provide an integrated animal training device, particularly integration of coverages surrounding the animal with tractor means.

Another object of the present application is to provide means for moving automatic training devices.

The objects are met in an animal training device according to claim 1 and comprising means for actuating the automatic training device and providing an integrated animal training device i.e. integration of coverages surrounding the animal and control unit comprising self-powered motor and device direction control means.

For the integrated animal training device comprising lateral and rear coverages surrounding the animal with control unit comprising self-powered motor and device direction control means, wheels are placed at the lower side of the lateral coverages. Furthermore, control u nit integrated to the coverages a re carried by another group of wheels.

Integrated animal training device is directed by virtue of the wheels placed lower side of the lateral coverages. These wheels are connected to transmission pivots which a re connected to further transmission means. These transmission means are actuated by hydraulic provided by self-powered motor placed in the control unit at the rear region of the integrated animal training device.

For securing the location of the animal being in the training device a confinement means is embodied preferably to the lateral coverages of the training device from ends thereof.

An embodiment of the claimed integrated animal training device is also proposed in the scope of the present invention. In this embodiment, the mechanism providing directing the front wheels is based upon assembling the mechanical components alongside the lateral coverages but not alongside the convex structures. Furthermore, some covering means comprising air bags are placed to the training device so that the animal can be held a desired location in the device.

Another embodiment is referred to connection means providing connection of the animal to the training device. In this embodiment instead of complete mechanical-based connection means, a magnetic-based connection is proposed. A magnet, preferably an electro-magnet, is disposed in the lateral coverages and a ring means connected from one end to the saddle and associated from other end with the electro-magnet is controlled through magnetic force originated by the electro-magnet.

Furthermore another embodiment of the claimed animal training device is referred to movable convex structures. Particularly the legs in association with the lateral coverages are capable of displacing in housings formed in the lateral coverages.

### DESCRIPTION OF THE FIGURES

Further objects and advantages of the present invention will become apparent upon reading the following description taken in conjunction with the appended drawings wherein:
Figure 1 illustrates the perspective view of the integrated animal training device in conjunction with the present invention.
Figure 2 illustrates the directing wheels of the integrated animal training device in conjunction with the present invention.
Figure 3 illustrates the perspective view of the confinement means in conjunction with the present invention.
Figure 4 illustrates the perspective view of the alternative integrated animal training device in conjunction with the present invention.
Figure 5 illustrates the front and rear covering means in conjunction with the present invention.
Figure 6 illustrates the mechanism providing displacing of the convex structures with respect to the lateral coverages in conjunction with the present invention.
Figure 7 illustrates the magnetic-based structure disposed in the lateral coverages in conjunction with the present invention.

### REFERENCE NUMBERS OF THE COMPONENTS

- 7: Convex structure
- 9: Curve coverage
- 15: Lateral coverage
- 23: Chest band
- 45: Rear coverage
- 113: Front wheels
- 114: Rotary pivot
- 115: Direction arm
- 116: Piston
- 117: Primary hydraulic line
- 118: Valve
- 119: Steering wheel
- 120: Pipe
- 121: Self-powered motor
- 122: Rear wheels
- 123: Intermediary part
- 124: Rear unit
- 125: Secondary hydraulic line
- 126: Piston-actuating pivot
- 127: Upper connecting rod
- 128: Beam
- 129: Actuator pivot bearing
- 130: Upper connecting rod bearing
- 131: Lower connecting rod bearing
- 132: Lower connecting rod
- 133: Direction arm bearing
- 134: Holder pieces
- 135: Barrier part
- 136: Harrow
- 137: Harrow piston
- 138: Piston arm
- 140: Directing beam
- 141: Right hydraulic line
- 142: Left hydraulic line
- 143: Feeding hydraulic line
- 144: Evacuation hydraulic line
- 145: Steering beam
- 146: Outer housing
- 147: Displacement opening
- 148: Middle connection
- 149: Curved bar
- 150: Straight bar
- 151: Connecting rod
- 152: Vertical beam
- 153: Protective lid
- 155: Convex structure legs
- 156: Actuator pivot
- 157: Support pivot
- 158: Actuation ring
- 159: Support ring
- 160: Upper bearings
- 161: Lower bearings
- 162: Follower
- 163: Wheel
- 164: Wheel arm
- 165: Actuator ring arm
- 166: Support ring arm
- 167: Holder arm
- 168: Motor
- 170: Horizontal sledge
- 171: Sledge spring
- 172: Sledge motor
- 173: Displacement opening
- 174: Housing
- 175: Electro-magnet
- 176: Ring
- 177: Rod
- 178: Covering means
- 179: Fixed arm

### DETAILED DESCRIPTION OF INVENTION

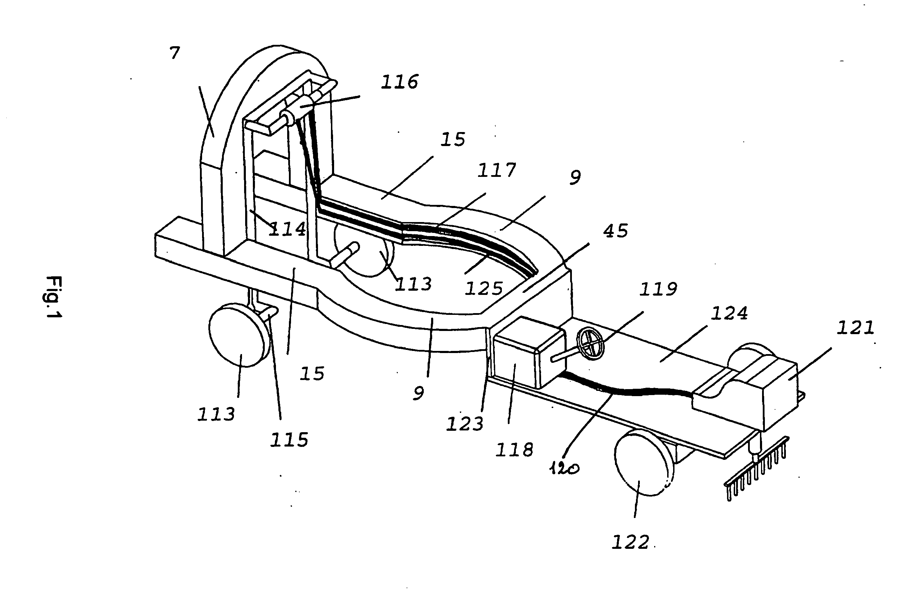

Figure 1 illustrates the perspective view of an integrated animal training device not according to the invention. According to the figure, a rear unit (124) integrated to the coverages through an intermediary part (123). A self-powered motor (121) is placed onto the rear unit (124). Rotational movement originated from the self-powered motor (121) is transmitted to rear wheels (122) by differential mechanism.

Guiding the integrated animal training device is provided by front wheels (113). Changing the direction of the front wheels (113) is achieved by hydraulic supplied from the self-powered motor (121). Hydraulic is pumped by the self-powered motor (121) and transported by a pipe (120) to a valve (118) located under the steering wheel (119).

As the steering wheel is turned, a pivot connected to the steering wheel (119) directs the hydraulic through valve channels and then the hydraulic is transmitted by primary hydraulic line (117) or secondary hydraulic line (125) to the appropriate piston (116) chamber. The piston (116) is preferably placed to substantially upper part of the convex structure (7) and on a piston-actuating pivot (126) for actuating this pivot.

As seen in the Figure 1, the primary and secondary hydraulic lines (117,125) are connected to two separate chambers in which cylinders are disposed of the piston (116). Once the valve (118) is directed through the steering wheel (119), hydraulic is accumulated into one of these chambers of the piston (116) whereby the piston (116) actuates the piston-actuating pivot (126) linearly in horizontal direction.

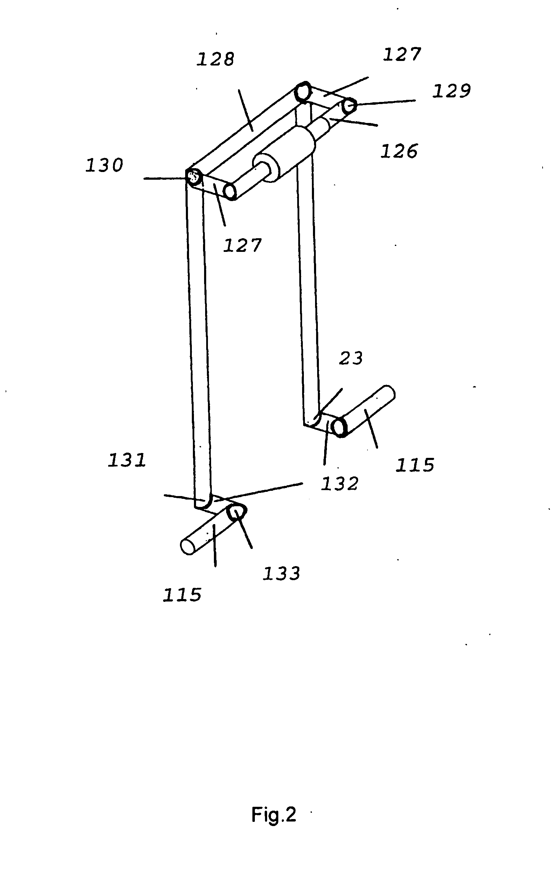

As illustrated in Figure 2, as the piston-actuating pivot (126) is moved, an upper connecting rod (127) is actuated accordingly. For structural integrity, an actuator pivot bearing (129) is placed between the piston-actuating pivot (126) and the upper connecting rod (127). The movement is further transmitted to a rotary pivot (114) connected from one side to the upper connecting rod (127) and placed in vertical direction. For supporting the structure, a beam (128) is embodied at the junction point of the upper connecting rods (127) and the rotary pivots (114) as parallel to the piston (116). Rotary motion of the rotary pivots (114) is transmitted to lower connecting rods (132) through lower connecting rod bearings (131) and the motion is further transmitted to direction arms (115) connected from one end to the front wheels (113) and connected from other end to lower connecting rods (132). Similarly, for structural integrity, a direction arm bearing (133) is placed between the direction arm (126) and the lower connecting rod (132). Since the direction arms (115) are placed relatively distant from the front wheel (113) centers, directing the front wheels (113) is achieved simply.

Front wheels (113) directing mechanism is mounted preferably upper side i.e. alongside the convex structures (7), since the animal to be trained can introduce into and leave the training device.

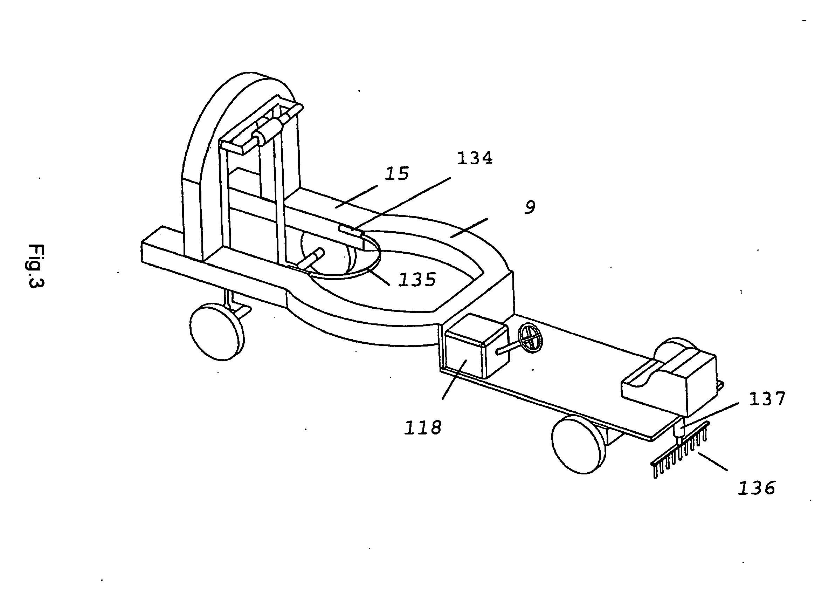

Figure 3 illustrates the perspective view of the confinement means or barrier part in conjunction with the present invention. In case of the animal is frightened the barrier part (135) prevents the animal to go inside the training device. The barrier part is secured to the lateral coverages through holder pieces (134) which are preferably hydraulic-based pistons.

The barrier part is in contact with the backside of the animal once introduced into the animal device. Since the barrier part is in contact with the animal directly, it is preferably made of flexible material and furthermore in order to enhance the flexibility thereof, spring means can be attached thereto.

A harrow (136) is placed at the backside of the integrated animal training device for smoothing the ground as the training device moves on the ground. The harrow can be lifted up down by a harrow piston (137).

Figure 1, figure 2, figure 3 are only given to make easy understanding of the invention and also aforesaid embodiments cited in these figures do not form part of the invention. They have been only given in order to make clear the present invention without extending beyond the content of the application.

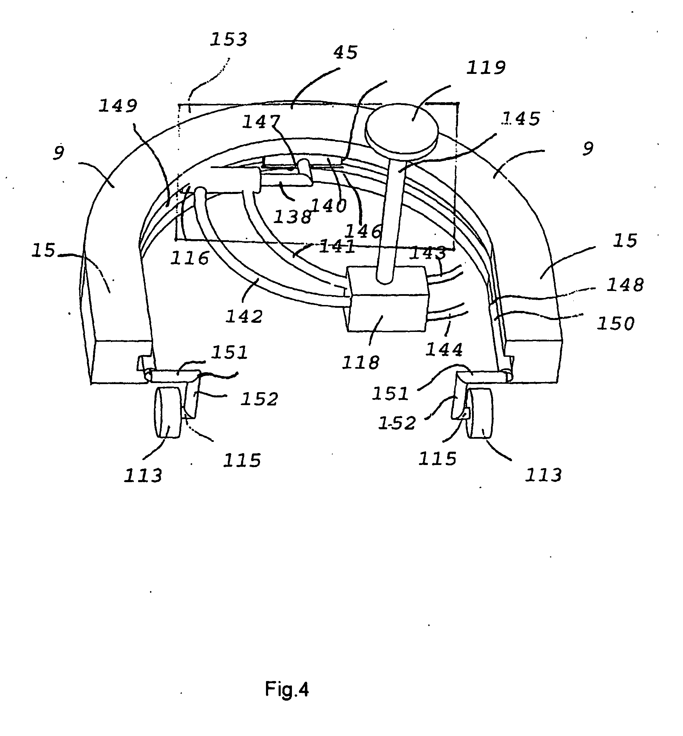

Figure 4 illustrates the perspective view of the integrated animal training device. According to the figure, as the steering wheel (119) is turned, the steering beam (145) connected to the steering wheel (119) from one end and connected to the valve (118) from other end, lock or unlock the channels in the valve (118) so that the hydraulic is directed in the desired direction. Preferably, the valve comprises four openings two of which are used to feed the hydraulic into the piston (116) ultimately providing direction change of the front wheels. The third opening is embodied for transmitting the hydraulic from hydraulic storage to the valve (118) by virtue of a feeding hydraulic line (143) and the fourth one is embodied for evacuating the excess hydraulic to the hydraulic storage by virtue of an evacuation hydraulic line (144).

As seen in the Figure 4, the piston is fed with hydraulic from a right hydraulic line (141) and a left hydraulic line (142). Depending on the coming hydraulic, i.e. from right or left line, a piston arm (138) connected to the piston (116) is displaced in forward or backward directions. Since the piston arm (138) is rigidly attached to a directing beam (140), as the piston arm (138) is displaced accordingly the directing beam (140) is displaced in horizontal direction. For structural integrity, the directing beam (140) is supported by an outer housing (146), whereby the directing beam (140) is movable in the outer housing (146). Since the form of the directing beam (140) comprises a horizontal and a leg part component i.e. "T" like shape, horizontal displacement extent of the directing beam (140) is determined by the leg part component movable through displacement opening (147) formed in the outer housing (146).

The directing beam (140) movable in the horizontal direction by actuation of the piston (116) is attached to a curved bar (149) by virtue of a middle connection (148). This curved bar (149) is preferably disposed in the lateral coverages (15). Once the piston (116) actuates the directing beam (140), the curved bar (149) is moved and transfers its motion to a straight bar (150). Accordingly, the straight bar (150) transfers the motion to a connecting rod (151) further connected to a vertical beam (152) from the other end. Consequently, a direction arm (115) connected from one end to the vertical beam (152) and connected from other end to the front wheel (113) transfers the motion to the front wheel (113).

The above-mentioned components including piston (116), valve (118), directing beam (140), outer housing (146) etc. is covered by a protective lid (153) for preventing external effects thereof.

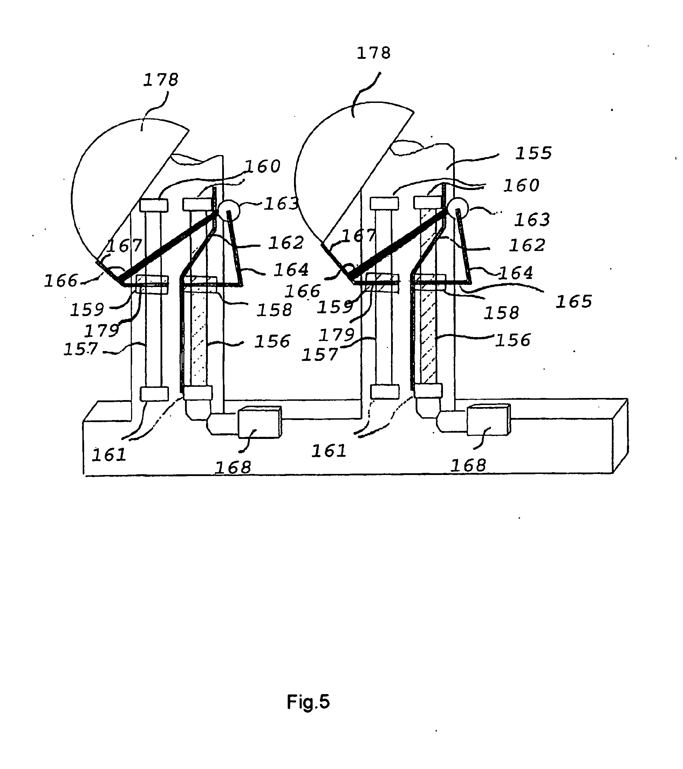

Figure 5 illustrates the front and rear covering means in conjunction with the present invention. Once the animal is placed in the training device, the front and rear regions of the animal are closed by means of covering means (178). The mechanism driving these covering means (178) is seen in the figure. Preferably, two pivots (156,157) are fixed vertically to the convex structure legs (155) through upper bearings (160) and lower bearings (161). One of the pivots, actuator pivot (156), is a screwed pivot and actuated by a motor (168) preferably at the bottom side. The motor (168) is preferably an electric-based motor, however it may be driven by energy provided from the self-powered motor.

An actuation ring (158) is annually placed to the actuator pivot (156). As the actuator pivot (156) is rotated, the actuation ring (158) screwed the inner surface is displaced in upwards and downwards directions. Alongside the actuator pivot (156), a support pivot (157) is placed so that the gravity force of the covering means (178) is met by the support pivot (157). Similarly, a support ring (159) connected rigidly to the actuator ring (158) is annually placed to the support pivot (157) and capable of displacing in upwards and downwards directions. eccentric pivot combination. A support ring arm (166) is pined from one end to the center of the wheel (163) and connected from other end to a holder arm (167) that is pined to fixed arm (179) connected to support ring (159).

The covering means (178) are driven as described below:

Once the actuator pivot (156) is rotated by the motor (168), the actuation ring (158) is displaced in vertical direction. In the mean time, the wheel (163) associated with the actuation ring (158) is moving on the follower (162) comprising eccentric pivot combination. As the wheel (163) is moving on the lower pivot of the eccentric pivot combination, the support ring arm (166) shifts its position and the covering means (178) connected to the support ring arm (166) shifts its position accordingly. Once the actuation ring (158) displaces to a certain point, the covering means (178) completely covers the front side of the animal.

Similar covering movement applies to when the actuation ring (158) moves on the upper pivot of the eccentric pivot combination. Once the actuation ring (158) displaces to a certain point, the covering means (178) is completely lifted and the front side of the animal is opened.

In the preferred embodiment of the invention, the above mentioned covering means (178) mechanism is assembled alongside the other leg of the convex structures so that the rear side of the animal are closed or opened.

Air bags are provided to the covering means (178) so that the position of the animal can be controlled by a flexible embodiment. These air bags can be inflated as desired to confine the position of the animal.

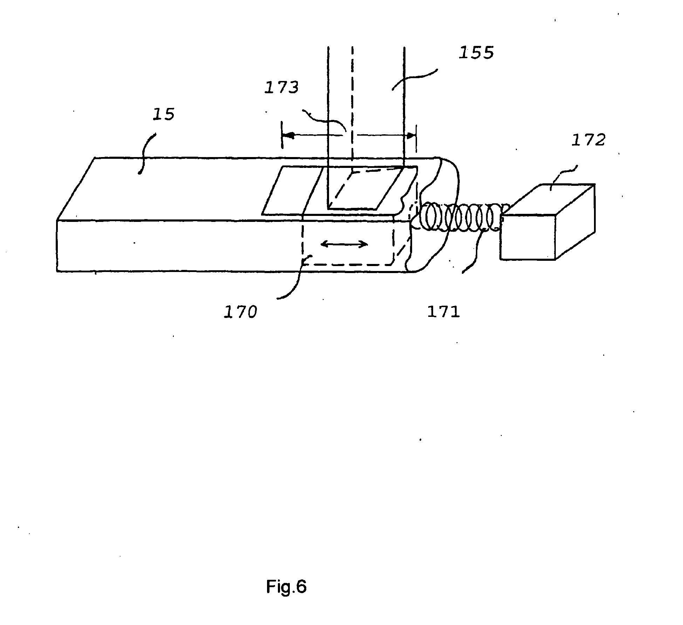

Figure 6 illustrates the mechanism providing displacing of the convex structures with respect to the lateral coverages in conjunction with the present invention. As seen from the figure, convex structure legs (155) are capable of moving in the lateral coverages (15) through the displacement opening (173). The convex structure legs (155) are connected to horizontal sledges (170) disposed in the lateral coverages (15).

The horizontal sledges (170) are driven by a sledge motor (172) and a sledge spring (178) is provided between the sledge motor (172) and the horizontal sledge (170). As the sledges (170) are driven by the sledge motor (172), the convex structure legs (155) connected to the sledges (170) move accordingly.

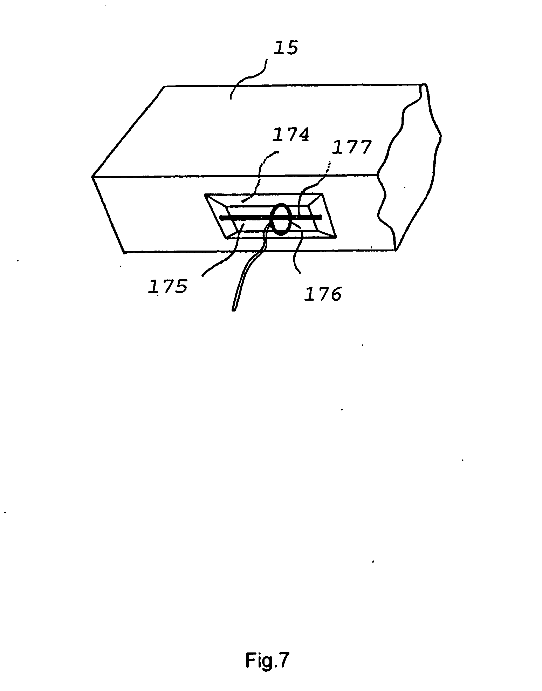

Figure 7 illustrates the magnetic-based structure disposed in the lateral coverages in conjunction with the present invention. Housings (174) in which electro-magnets (175) are disposed are formed preferably bilateral inner sides of the lateral coverages (15). A rod (177) capable of moving in the housing (174) and holding a ring (176) is embodied in the housing (174). This ring (176) is connected to the saddle (16) on the animal. Adjustable magnetic force provided by the electro-magnet renders the ring (176) to displace any desired amount in the housing (174).

## Claims

1. An automatic animal training system comprising a horse training device driven by a tractor positioned at the rear region thereof with lateral and rear sides or coverages which are covered by flexible material and at least one convex structure (7) surrounding the upper side of the training device and with the legs thereof being positioned on the lateral sides of the training device **characterized in that** a valve (118) controlled by a steering wheel (119) positioned to the tractor at the rear region of the training device is provided and said valve (118) having preferably four openings for hydraulic flow through thereof, a piston (116) directed by hydraulic flow is provided and said piston (116) comprises a piston arm (138) connected to a directing beam (140), and curved bars (149) symmetrically connected to the directing beam (140), straight bars (150) connected from one end to the curved bar (149) and connected from the other end to connecting rods (151) are provided, and vertical beams (152) connected to the connecting rods (151) is provided and direction arms (115) connected from one end to the vertical beams (152) and from the other end to front wheels (113) are provided.

2. An automatic animal training system according to claim 1, **characterized in that** a hydraulic feeding line (143) for the association of a hydraulic storage and the valve (118), a hydraulic evacuation line (144) for the association of a hydraulic storage and the valve (118), a right hydraulic line (141) and a left hydraulic line (142) for directing the hydraulic from the valve (118) to the piston (116) are provided.

3. An automatic animal training system according to any one of the claims 1 to 2, **characterized in that** said directing beam (140) comprises a "T" like shape and the piston arm (138) is connected to leg part of "T" like shaped directing beam (140).

4. An automatic animal training system according to any one of the claims 1 to 3, **characterized in that** an outer housing (146) for supporting the directing beam (140) is provided and the leg -part of "T" like shaped directing beam (140) is displaceable in a displacement opening (147) of the outer housing (146).

5. An automatic animal training system according to any one of the claims 1 to 4, **characterized in that** said directing beam (140) is disposed in the rear coverage and said curved bars (149) and straight bars (150) are disposed in the said lateral coverages.

6. An automatic animal training system according to any one of the claims 1 to 5, **characterized in that** a protective lid (153) movable in upward and downward directions for covering said piston (116) and said directing beam (140) is provided.

7. An automatic animal training system according to any one of the preceding claims, **characterized in that** at least one screwed actuator pivot (156) and at least one support pivot (157) are located alongside the convex structure legs (155) by virtue of upper bearings (160) and lower bearings (161).

8. An automatic animal training system according to any one of the preceding claims, **characterized in that** an actuation ring (158) inner surface screwed thereof and movable through the axis of the actuator pivot (156), and a support ring (159) connected to the actuation ring and movable through the axis of the support pivot (157) are provided.

9. An automatic animal training system according to any one of the preceding claims, **characterized in that** a motor (168) preferably positioned at the bottom side of the actuator pivot (156) for rotating thereof is provided.

10. An automatic animal training system according to any one of the preceding claims, **characterized in that** a wheel (163) connected to the actuation ring (158) through an actuator ring arm (165) and a wheel arm (164) is provided.

11. An automatic animal training system according to any one of the preceding claims, **characterized in that** a follower (162) comprising an eccentric pivot combination and the wheel (163) is movable thereon is provided.

12. An automatic animal training system according to any one of the preceding claims, **characterized in that** a support ring arm (166) pined from one end to the wheel (163) center and connected from other end to a holder arm (167) pined to a fixed arm (179) connected to support ring (159) is provided.

13. An automatic animal training system according to any one of the preceding claims, **characterized in that** covering means (178) connected to the holder arm (167) is provided.

14. An automatic animal training system according to any one of the preceding claims, **characterized in that** mechanical components holding and actuating the covering means (178) are disposed both convex structure legs (155) for covering front and rear side of the animal in the training device.

15. An automatic animal training system according to any one of the preceding claims, **characterized in that** air bags are provided in the covering means (178).

16. An automatic animal training system according to any one of the preceding claims, **characterized in that** horizontal sledges (170) associated with the convex structure legs (155) are disposed in the lateral coverages (15).

17. An automatic animal training system according to any one of the preceding claims, **characterized in that** a sledge spring (178) connected from one end to the horizontal sledge (170) and connected from other end to a sledge motor (172) is provided.

18. An automatic animal training system according to any one of the preceding claims, **characterized in that** a displacement opening (173) is formed in the lateral coverages for displacing the convex structure legs (155) therein.

19. An automatic animal training system according to any one of the preceding claims, **characterized in that** a housing (45) is provided bilateral sides of the lateral coverages (15) and a magnet (175), preferably an electro-magnet, is disposed therein.

20. An automatic animal training system according to any one of the preceding claims, **characterized in that** a rod (177) movable in the housing (45) and a ring (176) connected to the rod (177) and connected to the saddle are provided.

21. An automatic animal training system according to any one of the preceding claims, **characterized in that** said ring (176) is capable of moving through a magnetic force provided by the electro-magnet (175).

## Patentansprüche

1. Automatisches Tiertrainingssystem, umfassend eine Pferdetrainingsvorrichtung, welche durch eine Zugmaschine angetrieben wird, die an einem hinteren Bereich davon mit lateralen und hinteren Seiten oder Abdeckungen, welche durch biegsames Material bedeckt sind, und wenigstens eine konvexe Struktur (7) positioniert ist, welche die obere Seite der Trainingsvorrichtung umgibt und wobei die Beine davon auf den lateralen Seiten der Trainingsvorrichtung positioniert sind, **dadurch gekennzeichnet, dass** ein Ventil (118), welches durch ein Steuerrad (119) gesteuert wird, an der Zugmaschine an einem hinteren Bereich der Trainingsvorrichtung vorgesehen ist und das Ventil (118) vorzugsweise vier Öffnungen für den hydraulischen Fluss durch dieses aufweist, wobei ein Kolben (116), welcher durch den hydraulischen Fluss gerichtet ist, vorgesehen ist und der Kolben (116) einen Kolbenarm (138), der mit einem Ausrichtträger (140) verbunden ist, und gekrümmte Stäbe (149) umfasst, die symmetrisch mit dem Ausrichtträger (140) verbunden sind, wobei gerade Stäbe (150), die von einem Ende mit dem gekrümmten Stab (149) und vom anderen Ende mit Verbindungsstangen (151) verbunden sind, vorgesehen sind und vertikale Träger (152), die mit den Verbindungsstangen (151) verbunden sind, vorgesehen sind und wobei Ausrichtarme (115), die von einem Ende mit den vertikalen Trägern (152) und vom anderen mit vorderen Rädern (113) verbunden sind, vorgesehen sind.

2. Automatisches Tiertrainingssystem gemäß Anspruch 1, **dadurch gekennzeichnet, dass** eine hydraulische Speiseleitung (143) für die Verbindung eines hydraulischen Speichers und des Ventils (118), eine hydraulische Entsorgungsleitung (144) für die Verbindung eines hydraulischen Speichers und des Ventils (118), eine rechte hydraulische Leitung (141) und eine linke hydraulische Leitung (142) zum Leiten des Hydraulikfluids vom Ventil (118) zum Kolben (116) vorgesehen sind.

3. Automatisches Tiertrainingssystem gemäß jedem der Ansprüche 1 bis 2, **dadurch gekennzeichnet, dass** der Ausrichtträger (140) eine "T"-artige Form aufweist und der Kolbenarm (138) mit dem Beinteil des "T"-artig geformten Ausrichtträgers (140) verbunden ist.

4. Automatisches Tiertrainingssystem gemäß jedem der Ansprüche 1 bis 3, **dadurch gekennzeichnet, dass** ein äußeres Gehäuse (146) zum Tragen des Ausrichtträgers (140) vorgesehen ist und der Beinteil des "T"-artig geformten Ausrichtträgers (140) in eine Versetzungsöffnung (147) des äußeren Gehäuses (146) versetzbar ist.

5. Automatisches Tiertrainingssystem gemäß jedem der Ansprüche 1 bis 4, **dadurch gekennzeichnet, dass** der Ausrichtträger (140) in der hinteren Abdeckung angeordnet ist und die gekrümmten Stäbe (149) und die geraden Stäbe (150) in den lateralen Abdeckungen angeordnet sind.

6. Automatisches Tiertrainingssystem gemäß jedem der Ansprüche 1 bis 5, **dadurch gekennzeichnet, dass** eine schützende Klappe (153), welche in die Richtung nach oben und in die Richtung nach unten bewegbar ist, zur Abdeckung des Kolbens (116) und des Ausrichtträgers (140) vorgesehen ist.

7. Automatisches Tiertrainingssystem gemäß jedem der vorangehenden Ansprüche, **dadurch gekennzeichnet, dass** wenigstens ein geschraubter Betätigungszapfen (156) und wenigstens ein Tragzapfen (157) entlang der konvexen Strukturbeine (155) mittels oberer Lager (160) und unterer Lager (161) angeordnet sind.

8. Automatisches Tiertrainingssystem gemäß jedem der vorangehenden Ansprüche, **dadurch gekennzeichnet, dass** ein Betätigungsring (158), dessen innere Oberfläche darauf geschraubt ist und durch die Achse des Betätigungszapfens (156) bewegbar ist, und ein Tragering (159), der mit dem Betätigungsring verbunden ist und durch die Achse des Tragezapfens (157) bewegbar ist, vorgesehen sind.

9. Automatisches Tiertrainingssystem gemäß jedem der vorangehenden Ansprüche, **dadurch gekennzeichnet, dass** ein Motor (168), der vorzugsweise an der Bodenseite des Betätigungszapfens (156) zum Drehen desselben positioniert ist, vorgesehen ist.

10. Automatisches Tiertrainingssystem gemäß jedem der vorangehenden Ansprüche, **dadurch gekennzeichnet, dass** ein Rad (163), das mit dem Betätigungsring (158) durch einen Betätigungsringarm (165) und einen Radarm (164) verbunden ist, vorgesehen ist.

11. Automatisches Tiertrainingssystem gemäß jedem der vorangehenden Ansprüche, **dadurch gekennzeichnet, dass** ein Nachläufer (162), der eine exzentrische Zapfenverbindung umfasst und wobei das Rad (163) darauf bewegbar ist, vorgesehen ist.

12. Automatisches Tiertrainingssystem gemäß jedem der vorangehenden Ansprüche, **dadurch gekennzeichnet, dass** ein Trageringarm (166) vorgesehen ist, der von einem Ende an der Mitte des Rades (163) aufgesteckt und vom anderen Ende mit einem Halterarm (167) verbunden ist, welcher auf einen feststehenden Arm (179) aufgesteckt ist, der mit dem Tragering (159) verbunden ist.

13. Automatisches Tiertrainingssystem gemäß jedem der vorangehenden Ansprüche, **dadurch gekennzeichnet, dass** ein Abdeckungsmittel (178), das mit dem Halterarm (167) verbunden ist, vorgesehen ist.

14. Automatisches Tiertrainingssystem gemäß jedem der vorangehenden Ansprüche, **dadurch gekennzeichnet, dass** mechanische Bauteile, die das Abdeckungsmittel (178) halten und betätigen, an beiden konvexen Strukturbeinen (155) zum Bedecken der vorderen und der hinteren Seite des Tieres in der Trainingsvorrichtung angeordnet sind.

15. Automatisches Tiertrainingssystem gemäß jedem der vorangehenden Ansprüche, **dadurch gekennzeichnet, dass** Luftsäcke im Abdeckungsmittel (178) vorgesehen sind.

16. Automatisches Tiertrainingssystem gemäß jedem der vorangehenden Ansprüche, **dadurch gekennzeichnet, dass** horizontale Schlitten (170), die den konvexen Strukturbeinen (155) beigefügt sind, in den lateralen Abdeckungen (15) angeordnet sind.

17. Automatisches Tiertrainingssystem gemäß jedem der vorangehenden Ansprüche, **dadurch gekennzeichnet, dass** eine Schlittenfeder (178), die an einem Ende mit dem horizontalen Schlitten (170) verbunden ist und am anderen Ende mit einem Schlittenmotor (172) verbunden ist, vorgesehen ist.

18. Automatisches Tiertrainingssystem gemäß jedem der vorangehenden Ansprüche, **dadurch gekennzeichnet, dass** eine Versetzungsöffnung (173) in den lateralen Abdeckungen zum Versetzen der konvexen Strukturbeine (155) darin ausgebildet ist.

19. Automatisches Tiertrainingssystem gemäß jedem der vorangehenden Ansprüche, **dadurch gekennzeichnet, dass** ein Gehäuse (45) an beiden Seiten der lateralen Abdeckungen (15) vorgesehen ist und ein Magnet (175), vorzugsweise ein Elektromagnet, darin angeordnet ist.

20. Automatisches Tiertrainingssystem gemäß jedem der vorangehenden Ansprüche, **dadurch gekennzeichnet, dass** eine Stange (177), die im Gehäuse (45) bewegbar ist, und ein Ring (176), der mit der Stange (177) verbunden ist und mit dem Sattel verbunden ist, vorgesehen sind.

21. Automatisches Tiertrainingssystem gemäß jedem der vorangehenden Ansprüche, **dadurch gekennzeichnet, dass** der Ring (176) in der Lage ist, sich durch eine Magnetkraft, die durch den Elektromagneten (175) bereitgestellt wird, zu bewegen.

## Revendications

1. Système automatique de dressage d'animal comprenant un dispositif de dressage de cheval entraîné par un tracteur positionné au niveau de la région arrière de celui-ci avec des côtés latéraux et arrière ou des couvertures qui sont recouverts de matériau flexible et au moins une structure convexe (7) entourant le côté supérieur du dispositif de dressage et les pieds de celui-ci étant positionnés sur les côtés latéraux du dispositif de dressage **caractérisé en ce qu'**une valve (118) contrôlée par un volant de direction (119) positionné sur le tracteur au niveau de la région arrière du dispositif de dressage est fournie et ladite valve (118) ayant de préférence quatre ouvertures pour un flux hydraulique à travers celles-ci, un piston (116) dirigé par le flux hydraulique est fourni et ledit piston (116) comprend un bras de piston (138) connecté à un longeron de direction (140), et des barres incurvées (149) connectées symétriquement au longeron de direction (140), des barres droites (150) connectées d'une extrémité à la barre incurvée (149) et connectées de l'autre extrémité à des bielles (151) sont fournies, et des longerons verticaux (152) connectés aux bielles (151) sont fournis et des bras de direction (115) connectés d'une extrémité aux longerons verticaux (152) et de l'autre extrémité aux roues avant (113) sont fournis.

2. Système automatique de dressage d'animal selon la revendication 1, **caractérisé en ce qu'**une conduite d'alimentation hydraulique (143) pour l'association d'un stockage hydraulique et de la valve (118), une conduite d'évacuation hydraulique (144) pour l'association d'un stockage hydraulique et de la valve (118), une conduite hydraulique droite (141) et une conduite hydraulique gauche (142) pour diriger le flux hydraulique de la valve (118) vers le piston (116) sont fournies.

3. Système automatique de dressage d'animal selon l'une quelconque des revendications 1 et 2, **caractérisé en ce que** ledit longeron de direction (140) comprend une forme en T et le bras de piston (138) est connecté à la partie de pied du longeron de direction de forme en T (140).

4. Système automatique de dressage d'animal selon l'une quelconque des revendications 1 à 3, **caractérisé en ce qu'**un carter extérieur (146) pour supporter le longeron de direction (140) est fourni et la partie de pied du longeron de direction de forme en T (140) peut être déplacée dans une ouverture de déplacement (147) du carter extérieur (146).

5. Système automatique de dressage d'animal selon l'une quelconque des revendications 1 à 4, **caractérisé en ce que** ledit longeron de direction (140) est disposé dans la couverture arrière et lesdites barres incurvées (149) et lesdites barres droites (150) sont disposées dans lesdites couvertures latérales.

6. Système automatique de dressage d'animal selon l'une quelconque des revendications 1 à 5, **caractérisé en ce qu'**un couvercle protecteur (153) déplaçable dans la direction vers le haut et dans la direction vers le bas pour couvrir ledit piston (116) et ledit longeron de direction (140) est fourni.

7. Système automatique de dressage d'animal selon l'une quelconque des revendications précédentes, **caractérisé en ce qu'**au moins un pivot d'actionneur vissé (156) et au moins un pivot de support (157) sont situés le long des pieds de structure convexe (155) en vertu de paliers supérieurs (160) et de paliers inférieurs (161).

8. Système automatique de dressage d'animal selon l'une quelconque des revendications précédentes, **caractérisé en ce qu'**un anneau d'actionnement (158) dont la surface intérieure est vissée à celui-ci et déplaçable à travers l'axe du pivot d'actionneur (156), et un anneau de support (159) connecté à l'anneau d'actionnement et déplaçable à travers l'axe du pivot de support (157) sont fournis.

9. Système automatique de dressage d'animal selon l'une quelconque des revendications précédentes, **caractérisé en ce qu'**un moteur (168) positionné de préférence au bas du pivot d'actionneur (156) pour le faire tourner est fourni.

10. Système automatique de dressage d'animal selon l'une quelconque des revendications précédentes, **caractérisé en ce qu'**une roue (163) connectée à l'anneau d'actionnement (158) à travers un bras d'anneau d'actionneur (165) et un bras de roue (164) est fournie.

11. Système automatique de dressage d'animal selon l'une quelconque des revendications précédentes, **caractérisé en ce qu'**un suiveur (162) comprenant une combinaison du pivot excentrique et de la roue (163) déplaçable sur celui-ci est fourni.

12. Système automatique de dressage d'animal selon l'une quelconque des revendications précédentes, **caractérisé en ce qu'**un bras d'anneau de support (166) attaché d'une extrémité au centre de la roue (163) et connecté de l'autre extrémité à un bras de maintien (167) attaché à un bras fixe (179) connecté à l'anneau de support (159) est fourni.

13. Système automatique de dressage d'animal selon l'une quelconque des revendications précédentes, **caractérisé en ce que** des moyens de recouvrement (178) connectés au bras de maintien (167) sont fournis.

14. Système automatique de dressage d'animal selon l'une quelconque des revendications précédentes, **caractérisé en ce que** des composants mécaniques maintenant et actionnant les moyens de recouvrement (178) sont disposés sur les deux pieds de structure convexe (155) pour recouvrir l'avant et l'arrière de l'animal dans le dispositif de dressage.

15. Système automatique de dressage d'animal selon l'une quelconque des revendications précédentes, **caractérisé en ce que** des airbags sont fournis dans les moyens de recouvrement (178).

16. Système automatique de dressage d'animal selon l'une quelconque des revendications précédentes, **caractérisé en ce que** des traîneaux horizontaux (170) associés aux pieds de structure convexe (155) sont disposés dans les couvertures latérales (15).

17. Système automatique de dressage d'animal selon l'une quelconque des revendications précédentes, **caractérisé en ce qu'**un ressort de traîneau (178) connecté d'une extrémité au traîneau horizontal (170) et connecté de l'autre extrémité à un moteur de traîneau (172) est fourni.

18. Système automatique de dressage d'animal selon l'une quelconque des revendications précédentes, **caractérisé en ce qu'**une ouverture de déplacement (173) est formée dans les couvertures latérales pour déplacer les pieds de structure convexe (155) à l'intérieur de celle-ci.

19. Système automatique de dressage d'animal selon l'une quelconque des revendications précédentes, **caractérisé en ce qu'**un carter (45) est fourni sur les côtés bilatéraux des couvertures latérales (15) et un aimant (175), de préférence un électroaimant, est fourni à l'intérieur de celui-ci.

20. Système automatique de dressage d'animal selon l'une quelconque des revendications précédentes, **caractérisé en ce qu'**une tige (177) déplaçable dans le carter (45) et un anneau (176) connecté à la tige (177) et connecté à la selle sont fournis.

21. Système automatique de dressage d'animal selon l'une quelconque des revendications précédentes, **caractérisé en ce que** ledit anneau (176) est capable de se déplacer sous l'effet d'une force magnétique fournie par l'électroaimant (175).
